# EUROPEAN PATENT APPLICATION

(11) **EP 4 715 334 A1**
(43) Date of publication of application: **25.03.2026**
(21) Application number: 25203604.1
(22) Date of filing: 22.09.2025
(51) Int. Cl.: G01D 5/04, G01D 5/06, G01D 5/16

(54) **DEVICE FOR DETECTING THE POSITION OF, OR THE FORCES APPLIED TO, AN OBJECT**

(30) Priority: 24.09.2024 IT 202400021248
(71) Applicant: Lafer S.p.A., 36015 Schio (VI) (IT)
(72) Inventor: Scortegagna, Bruno, 36015 Schio (VI) (IT)
(74) Representative: Petraz, Gilberto Luigi

(57) **Abstract**

Device (10) for detecting the position of, or the forces applied to, an object, comprising at least one contact element (11) associated with a sensor (12) housed inside a waterproofing casing (19); the contact element (11) is mobile between at least a first rest position and at least a second operating position, and vice versa, and is configured to transmit motion to the sensor (12) indirectly through the use of one or more magnetic elements (13, 15, 17, 32, 33) or by means of a direct connection with the sensor (12).

## Description

### FIELD OF THE INVENTION

The present invention concerns a detection device usable in all situations where it is necessary to detect the position of an object, or changes in its position, or the forces applied to that object.

The present detection device can be used, for example, in the textile field to probe the edges of a fabric.

Other areas of use can include industry, for example to control the draw of material from reels, control conveyor belts, control valves, control industrial robots, control manufacturing machines, or other; agriculture, for example to control irrigation systems, control agricultural machinery, or other; or the automotive sector, for example to control vehicle steering, control engines, or control suspension systems; or the environment, for example to monitor the level of rivers or lakes, control wind turbines, control pumping systems, or other; the construction sector, for example to monitor the movement of cranes or operating machines, or other; or scientific research, for example to measure physical parameters, even in wet or submerged environments, or other.

### BACKGROUND OF THE INVENTION

As is known, there are detection devices variously used in different fields to detect the position or the change in position of a given object.

An example of a detection device is the potentiometer, which is provided with a first external mobile element in contact with the object whose position is to be detected associated with a second mobile element, such as a sliding contact, inside a position sensor.

The first mobile element can be a rod or suchlike, equipped with oscillatory movement, managed by means of mechanical elements such as counterweights, springs or suchlike, which often prove to be imprecise and tend to wear out over time.

A further limitation of these devices is that even the motion from the first mobile element to the second mobile element which is inside the position sensor is transmitted mechanically, and requires a direct contact with the outside of the position sensor, where the first mobile element is located.

It is difficult to use these known devices in situations with a satisfactory insulation from external agents, such as for example aggressive chemical substances or suchlike, in situations of immersion in water, or other situations that may result in damage to the position sensor.

There is therefore the need to perfect a position detection device that can overcome at least one of the disadvantages of the state of the art.

In particular, one purpose of the present invention is to provide a device capable of detecting the position of an object rapidly and precisely, which is durable, waterproof, and can even be used in environments in which there are aggressive chemical agents, high temperatures, or other, or when immersed in water.

Another purpose of the present invention is to provide a position detection device in which the reciprocally mobile parts are driven effectively and indirectly by means of magnetic means or by means of a direct connection.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes, a device for detecting the position of, or the forces applied to, an object according to the present invention comprises at least one contact element associated with a sensor housed inside a waterproofing casing, the contact element being mobile between at least a first rest position and at least a second operating position, and vice versa, and configured to transmit motion to the sensor indirectly through the use of one or more magnetic elements, or by means of a direct connection with the sensor.

The contact element is configured to oscillate or rotate between the first position and the second position, or vice versa, through the attractive or repulsive action of a first magnetic element associated with a fixed support and of a second magnetic element associated with the contact element, or through the attractive action of a magnetic element associated with the support or with the contact element, and of a metal element associated with the contact element or with the support and configured to be attracted by the magnetic element.

The sensor and the contact element are configured to attract each other magnetically by means of respective magnetic elements, or by means of at least one magnetic element and one metal element that can be attracted.

The present detection device is capable of detecting the position of an object or the forces applied to an object rapidly and precisely. Furthermore, the sensor is housed inside a waterproof casing. With this solution, the sensor can be used in a wide range of applications which require a precise measurement of the angular position or rotational speed in humid, wet, or submerged environments, or in the presence of aggressive chemical substances.

Thanks to the magnetic elements, or the magnetic element and the metal element, provided for the oscillation and/or rotation of the mobile element, it is possible to obtain a detection device capable of detecting the position of an object rapidly and precisely, thus avoiding the use of predominantly mechanical means for its movement.

The present detection device is essentially magnetic in nature, both in terms of the movement of the contact element and also in terms of the transmission of the oscillation to the sensor.

According to another aspect of the invention, the contact element is positioned outside the casing where the sensor is housed.

According to another aspect of the invention, the first and second magnetic elements are housed in corresponding seatings whose length is longer than the size of the first and second magnetic elements, so as to allow for a certain excursion or movement thereof in the direction of the magnetic force.

According to another aspect of the invention, the device comprises at least a third magnetic element associated with the support and configured to cooperate with the second magnetic element or with a metal element, if an attractive force is used.

According to another aspect of the invention, the contact element is pivoted to the support and oscillating or rotating around an axis substantially longitudinal with respect to the sensor.

According to another aspect of the invention, the support is positioned on an entry aperture of the casing.

According to another aspect of the invention, one of the additional magnetic elements, or the metal element, is positioned inside the casing, while the other of the additional magnetic elements, or the metal element, is positioned outside the casing.

According to another aspect of the invention, one of the additional magnetic elements, or the metal element, is housed in a seating created on an oscillating or rotating rocker arm provided with an attachment for connection with the sensor.

According to another aspect of the invention, the contact element is provided with an oscillating rod connected to the support or the casing by means of a pivoting attachment.

According to another aspect of the invention, the contact element is provided with a rocker arm comprising a seating for housing the second magnetic element and an attachment for pivoting on the support or on the casing.

According to another aspect of the invention, the rocker arm of the contact element comprises another seating for housing one of the magnetic elements or a metal element.

According to another aspect of the invention, the casing is provided with a base by means of which it can be stably attached, in any position whatsoever, to support means or suchlike.

According to another aspect of the invention, the support is attached to the casing by means of removable attachment elements and at least one sealing ring is provided between the casing and the support.

According to another aspect of the invention, the support comprises a housing which is provided with stops for the contact element in the first rest position and in the second operating position, respectively.

According to another aspect of the invention, the support provided in the device comprises a closing lid.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is an exploded view of a detection device according to the present invention;
- fig. 2 is a front view of the device in a rest position;
- fig. 3 is a lateral view of the device in the rest position;
- fig. 4 is a section view of the device considered along line IV-IV of fig. 3;
- fig. 5 is a front view of the device in an operating position;
- fig. 6 is a lateral view of the device in the operating position;
- fig. 7 is a section view of the device considered along line VII-VII of fig. 6.

We must clarify that the phraseology and terminology used in the present description, as well as the figures in the attached drawings also in relation as to how described, have the sole function of better illustrating and explaining the present invention in order to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration.

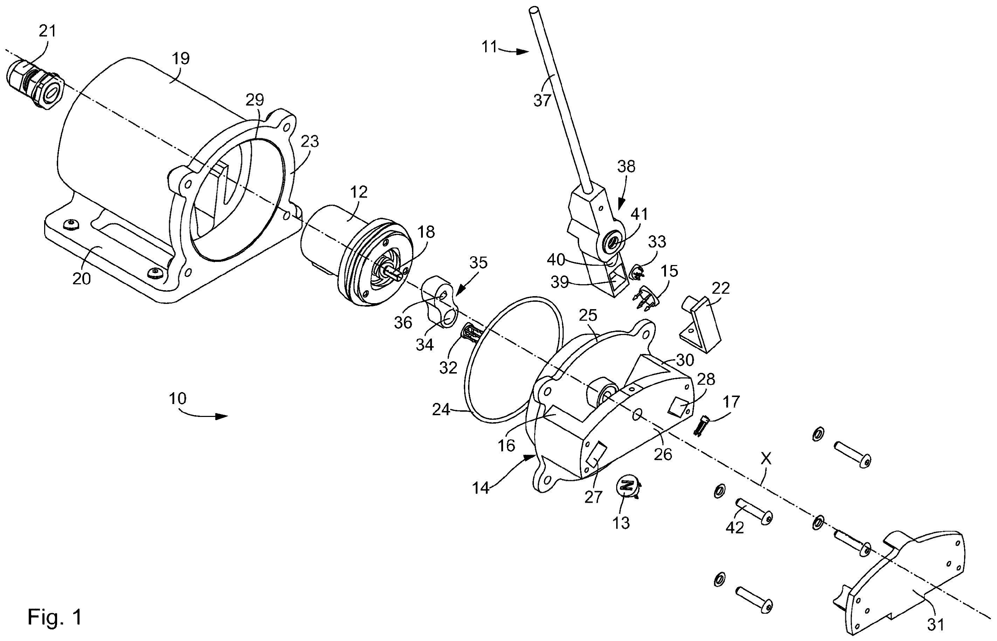

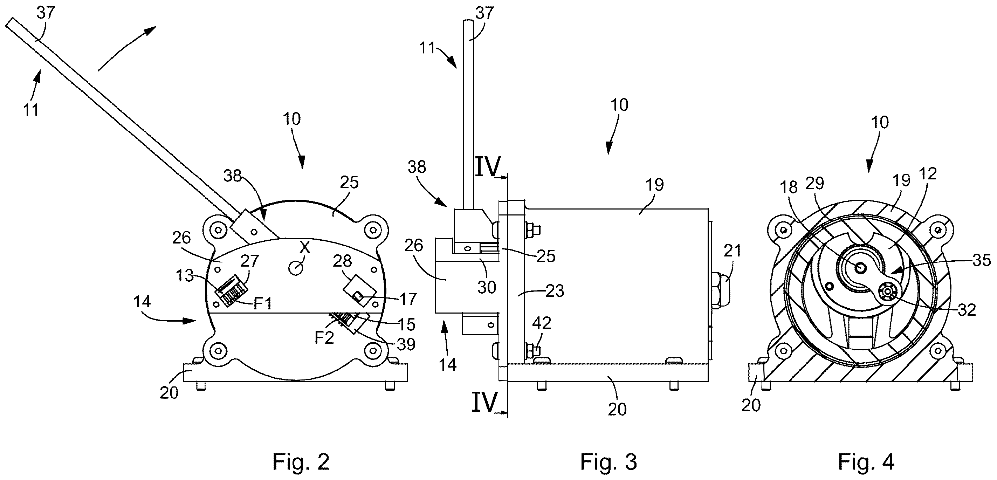

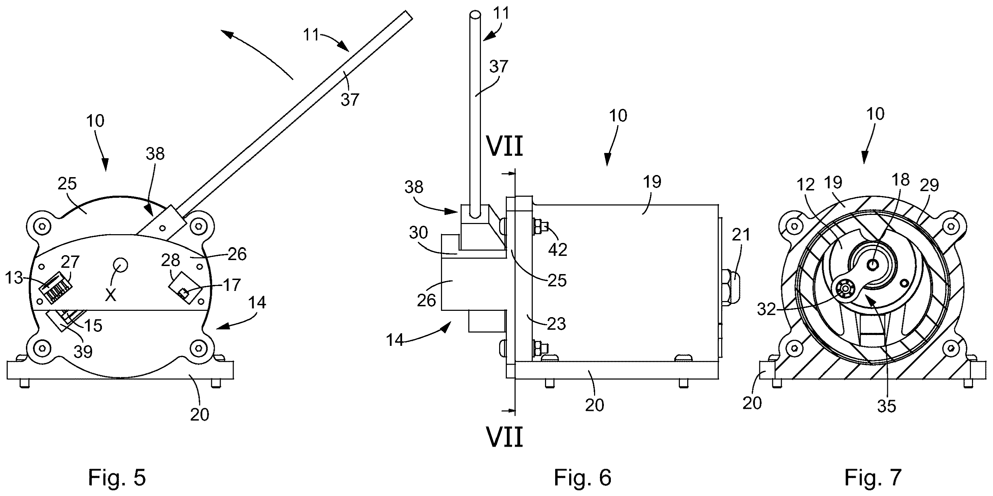

With reference to the attached drawings, see in particular fig. 1, fig. 2 and fig. 5, a device 10 for detecting the position of an object, or forces applied to such object, comprises at least one contact element 11 associated with a sensor 12, for example a position sensor or a sensor that detects an applied force. In the example shown, the contact element 11 is oscillating between at least a first rest position, fig. 2, maintained by means of the repulsion or attraction of at least a first magnetic element 13 associated with a support 14 that is fixed with respect to the contact element 11 and at least a second magnetic element 15 associated with the contact element 11, and at least a second operating position, fig. 5, in which it is displaced with respect to the first position as a result of the contact with the object whose position is to be detected. The contact element 11 is outside the sensor 12. Alternatively, one of the two magnetic elements 13 or 15 can be replaced by an element made of metal material that can be attracted by the magnetic element.

The first rest position is a limit position of the contact element 11 shown in figs. 2, 3 and 4, in which the magnetic elements 13 and 15, which in this case repel each other, cause the contact element 11 to be stable in a position in which they are at a maximum distance from each other. This stable position can also be determined by the attraction of the two magnetic elements 13 and 15 which, in this case, would be at a minimum distance from each other. A suitable stop 16 created on the support 14 determines the end of travel of the contact element 11 in the first limit rest position.

The stability in the first rest position is further increased by means of at least a third magnetic element 17, associated with the support 14 and configured to be attracted to the second magnetic element 15 associated with the contact element 11.

The second active position, that is, determined by the contact of the contact element 11 with an object, can be a limit position of maximum oscillation, see figs. 5, 6 and 7. In the second limit position, the contact element 11 can be in a position substantially mirroring the first rest position, or in another position. Once the contact with the object has ended, the contact element 11 automatically returns to the rest position thanks to the repulsion between the magnetic elements 13 and 15.

Depending on the nature and force of the contact, intermediate positions between the two limit positions are possible.

The contact element 11 is substantially pivoted to the support 14 and can oscillate around an axis X. This axis X is substantially longitudinal with respect to the sensor 12. The contact element 11 is in particular associated with a rotating element 18 of the sensor 12, to which a mobile part, such as a sliding contact or suchlike, will be connected, in the event the sensor 12 is, for example, a potentiometer or suchlike.

The sensor 12 is housed inside a casing 19, so that it is waterproofed against the action of external agents, such as water, chemical substances or other. The casing 19 is for example cylindrical in shape and is provided with a base 20 by means of which it can be stably attached on a support. The casing 19 can be positioned horizontally, as in the attached drawings, or also in other positions, vertical or inclined, while still guaranteeing the full functionality of the sensor 12. A support 21 is provided on one side of the casing 19, for example a cable gland or other, for the watertight housing of an electrical cable connected to the sensor 12. The support 14 can be attached to the casing 19 by means of removable attachment elements 42. In particular, a flange 23 is provided on the opposite side of the support 21 by means of which it is possible to attach the support 14 to the casing 19, by means of the removable attachment elements 42. The support 14 is substantially a cap of the casing 19, and at least one sealing ring 24 can be provided between it and the casing 19, in particular the flange 23.

The support 14 can have, by way of a non-limiting example, a first part 25 which can be substantially circular and on which the contact element 11 is pivoted. An entry aperture 29 of the casing 19 allows to position the support 14. The support 14 provides a housing 26, in particular protruding from the side opposite to that of insertion in the casing 19, in which there are created seatings 27 and 28 for containing the first magnetic element 13 and the third magnetic element 17, respectively.

The housing 26 defines the stop 16 for the rest position of the contact element 11 and a stop 30 for the position of maximum oscillation shown in figs. 5, 6 and 7. In particular, the edges of the housing 26 which are located on opposite sides thereof define the stops 16 and 30. A closing lid 31 can be associated with the support 14, allowing it to be better protected. The lid 31 can be attached to the support 14 by means of removable attachment elements, or by interlocking or other.

The sensor 12 is associated with at least one additional magnetic element 32 configured to be attracted to at least one more additional magnetic element 33 associated with the contact element 11. One of the magnetic elements 32 or 33 can be replaced by a metal element that can be attracted by the magnetic element. The magnetic element 32 is inside the casing 19 and physically separated from the magnetic element 33 located outside the casing 19. By means of this magnetic system, it is possible for the contact element 11 to transmit its oscillation to the sensor 12, substantially indirectly. Therefore, the sensor 12 can be housed inside the casing 19 effectively in a watertight manner. Alternatively, the contact element 11 can transmit the motion to the sensor 12 by means of a direct connection. In this case, a connection element, such as a pin, a shaft, a rod or other, can be provided between the sensor located inside the casing 19 and the contact element 11.

The magnetic element 32 is housed in a seating 34 created on an oscillating rocker arm 35 that provides an attachment 36 with the sensor 12, in particular with the rotating element 18. The attachment 36 allows the rocker arm 35 to oscillate following the movements of the contact element 11.

The contact element 11, which can be provided with a rod 37 or suchlike, is provided with a rocker arm 38 which is equipped with a seating 39 for housing the magnetic element 15. The rocker arm 38 is provided with another seating 40 for housing the magnetic element 33. The rocker arm 38 comprises an attachment 41 for pivoting on the support 14, so that it can oscillate with respect thereto. The seatings 39 and 40 can be created, for example, on a part of the rocker arm 38 diametrically opposite the rod 37 with respect to the attachment 41. The rocker arm 38 is substantially inserted in the housing 26 of the support 14. The rocker arm 38 can be provided with a corresponding lid 22.

The number and/or size of the magnetic elements to be placed in a certain position of the device 10 can be different from what shown. It is possible to provide more magnetic elements 13 and 15, as well as more magnetic elements 17, 32, 33, if provided. Moreover, if using attractive forces, one magnetic element of a pair of magnetic elements can be replaced by an element made of metal material that can be attracted by the magnetic element.

The seatings where the magnetic elements are housed can have a length slightly greater than the size of the magnetic elements, to allow for a certain excursion, or movement, in the direction of the magnetic force. Please see the magnetic element 13 in fig. 2 and the arrows F1 that represent the direction of a possible excursion of the magnetic element 13 of the support 14, or the arrows F2 relating to the magnetic element 15 of the contact element 11. This allows the contact element 11, and in particular the rocker arm 38, a constant effort thanks to the distance between the opposing magnetic elements 13 and 15 which becomes dynamic, reducing the natural increase in the repulsive force that occurs when the magnetic elements 13 and 15 approach each other. In this example, the magnetic elements 13 and 15 have polarities of the same sign facing each other.

In the present device 10, the contact element 11 is therefore mobile between the rest position and the operating position, and vice versa, and is configured to transmit the motion to the sensor 12 indirectly through the use of one or more magnetic elements 13, 15, 17, 32, 33, or by means of a direct connection.

It is clear that modifications and/or additions of parts may be made to the device for detecting the position of, or the forces applied to, an object as described heretofore, without thereby departing from the field and scope of the present invention, as defined by the claims.

It is also clear that, although the present invention has been described with reference to some specific examples, a person of skill in the art will be able to achieve other equivalent forms of detection device, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Device (10) for detecting the position of, or the forces applied to, an object, **characterized in that** it comprises at least one contact element (11) associated with a sensor (12) housed inside a waterproofing casing (19), and at least one support (14) attached to said casing (19), said contact element (11) being mobile between at least a first rest position and at least a second operating position, and vice versa, and configured to transmit motion to said sensor (12) indirectly through the use of one or more magnetic elements (13, 15, 17, 32, 33), wherein said contact element (11) is configured to oscillate or rotate between said first position and said second position, or vice versa, through the attractive or repulsive action of a first magnetic element (13) associated with said fixed support (14) and of a second magnetic element (15) associated with said contact element (11), or through the attractive action of a magnetic element associated with said support (14) or with said contact element (11), and of a metal element associated with said contact element (11) or with said support (14) and configured to be attracted by said magnetic element, wherein said sensor (12) and said contact element (11) are configured to attract each other magnetically by means of additional respective magnetic elements (32, 33) or by means of at least one magnetic element and one metal element.

2. Device (10) as in claim 1, **characterized in that** said contact element is positioned outside said casing (19) where said sensor (12) is housed.

3. Device (10) as in claim 1, **characterized in that** said first and second magnetic elements (13, 15) are housed in corresponding seatings (27, 39) whose length is longer than the size of the first and second magnetic elements (13, 15) to allow for a certain excursion thereof in the direction of the magnetic force.

4. Device (10) as in any claim hereinbefore, **characterized in that** it comprises at least a third magnetic element (17) associated with said support (14) configured to cooperate with said second magnetic element (15) or with a metal element, if an attractive force is used.

5. Device (10) as in any claim hereinbefore, **characterized in that** said contact element (11) is pivoted to the support (14) and oscillating or rotating around an axis (X) substantially longitudinal with respect to said sensor (12).

6. Device (10) as in any claim hereinbefore, **characterized in that** said support (14) is positioned on an entry aperture (29) of said casing (19).

7. Device (10) as in any claim hereinbefore, **characterized in that** one of said additional magnetic elements (32, 33), or said metal element, is positioned inside the casing (19), while the other of said additional magnetic elements (32, 33), or said metal element, is positioned outside the casing (19).

8. Device (10) as in claim 7, **characterized in that** one of said additional magnetic elements (32, 33), or said metal element, is housed in a seating (34) created on an oscillating or rotating rocker arm (35) provided with an attachment (36) for connection with said sensor (12).

9. Device (10) as in any claim hereinbefore, **characterized in that** said contact element (11) is provided with an oscillating rod (37) connected to said support (14) or said casing (19) by means of a pivoting attachment (41).

10. Device (10) as in any claim hereinbefore, **characterized in that** said contact element (11) is provided with a rocker arm (38) comprising a seating (39) for housing said second magnetic element (15).

11. Device (10) as in claim 10, **characterized in that** said rocker arm (38) of the contact element (11) comprises another seating (40) for housing one of said magnetic elements (32, 33) or a metal element.

12. Device (10) as in any claim hereinbefore, **characterized in that** said casing (19) is provided with a base (20) by means of which it can be stably attached to support means or suchlike.

13. Device (10) as in any claim hereinbefore, **characterized in that** said support (14) is attached to said casing (19) by means of removable attachment elements (42) and at least one sealing ring (24) is provided between said casing (19) and said support (14).

14. Device (10) as in any claim hereinbefore, **characterized in that** said support (14) comprises a housing (26) which is provided with stops (16, 30) for said contact element (11) in said first rest position and in said second operating position, respectively.

15. Device (10) as in any claim hereinbefore, **characterized in that** said support (14) comprises a closing lid (31).
